# EUROPEAN PATENT APPLICATION

(11) **EP 4 507 409 A1**
(43) Date of publication of application: **12.02.2025**
(21) Application number: 22936189.4
(22) Date of filing: 08.04.2022
(51) Int. Cl.: H04W 64/00

(54) **DOWNLINK POSITIONING METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/085889
(87) International publication number: WO 2023/193251

(57) **Abstract**

A downlink positioning method and apparatus, and a device and a storage medium, which relate to the field of wireless communications. The method is applied to a terminal device, and comprises: receiving configuration information of a downlink positioning signal, which is sent by a network device, wherein the downlink positioning signal is used for obtaining a carrier phase difference (210). By means of the method, the apparatus, the device and the storage medium, a positioning method based on a carrier phase difference can be used in a cellular network.

## Description

### TECHNICAL FIELD

The present disclosure relates to the field of wireless communication, in particular, to a downlink positioning method, a downlink positioning apparatus, a device, and a storage medium.

### BACKGROUND

In various location-based services such as communication, navigation, and positioning, the network device needs to obtain location information on the terminal.

In the 5th Generation Mobile Network (5G) New Radio (NR) system at present, the carrier phase measurement is used for positioning. The terminal receives the downlink positioning signal configuration sent by the network device, and receives the downlink positioning signal sent by the positioning node based on the downlink positioning signal configuration. The terminal measures the carrier phase, and reports the measurement result to the network device. The network device calculates the location of the terminal.

The measured carrier phase includes at least one of an intact cycle number of the carrier phase and a fraction less than one cycle of the carrier phase. The fraction less than one cycle can be obtained by performing subtraction between the phase of the reference signal and the phase of the downlink positioning signal received by the terminal or obtained through the phase of the downlink positioning signal received by the terminal. However, the intact cycle number cannot be directly measured by the terminal, which can only be vaguely estimated.

### SUMMARY

Embodiments of the present disclosure provide a downlink positioning method, a downlink positioning apparatus, a device, and a storage medium, which can adopt the carrier phase difference positioning method in the cellular network. The technical solutions are as follows.

According to one aspect of the present disclosure, a downlink positioning method is provided. The method is executed by a terminal, and includes: receiving configuration information on a downlink positioning signal sent by a network device, wherein the downlink positioning signal is configured for obtaining of a carrier phase difference.

According to one aspect of the present disclosure, a downlink positioning method is provided. The method is executed by a network device, and includes: sending configuration information on a downlink positioning signal to a terminal, wherein the downlink positioning signal is configured for obtaining of a carrier phase difference by the terminal.

According to one aspect of the present disclosure, a downlink positioning apparatus is provided. The apparatus includes: a first receiving module configured to receive configuration information on a downlink positioning signal sent by a network device, wherein the downlink positioning signal is configured for obtaining of a carrier phase difference.

According to one aspect of the present disclosure, a downlink positioning apparatus is provided. The apparatus includes: a second sending module configured to send configuration information on a downlink positioning signal to a terminal, wherein the downlink positioning signal is configured for obtaining of a carrier phase difference by the terminal.

According to one aspect of the present disclosure, a terminal is provided. The terminal includes: a transceiver configured to receive configuration information on a downlink positioning signal sent by a network device, wherein the downlink positioning signal is configured for obtaining of a carrier phase difference.

According to one aspect of the present disclosure, a network device is provided. The network device includes: a transceiver configured to send configuration information on a downlink positioning signal to a terminal, wherein the downlink positioning signal is configured for obtaining of a carrier phase difference by the terminal.

According to one aspect of the present disclosure, a computer-readable storage medium is provided. The computer-readable storage medium stores executable instructions, which can be loaded and executed by a processor to cause the downlink positioning method as described in the above aspects to be implemented.

According to one aspect of the present disclosure, a chip is provided. The chip includes a programmable logic circuits and/or program instructions. When running on a computer device, the chip is configured to cause the downlink positioning method described in the above aspects to be implemented.

According to one aspect of the present disclosure, a computer program product is provided. When running on a processor of a computer device, the computer program product causes the computer device to implement the downlink positioning method described in the above aspects.

The technical solutions provided embodiments of the present disclosure include at least the following beneficial effects.

The carrier phase difference is introduced into the cellular network, to configure the downlink positioning signal, which can be used for positioning based on the carrier phase difference, for the terminal. The terminal receives the downlink positioning signal based on the configuration information, and measures the carrier phase difference, so that the location of the terminal can be calculated based on the carrier phase difference, thereby positioning the terminal accurately, and achieving the centimeter level positioning accuracy.

### BRIEF DESCRIPTION OF THE DRAWINGS

In order to provide a clearer explanation of technical solutions in embodiments of the present disclosure, a brief introduction to the drawings required in the description of embodiments of the present disclosure will be provided in the following. It is apparent that the drawings are only some of the embodiments of the present disclosure, and for those skilled in the art, other drawings can be obtained based on these drawings without creative efforts.
FIG. 1 shows a schematic diagram of a communication system according to one or more embodiments of the present disclosure;
FIG. 2 shows a flowchart of a downlink positioning method according to one or more embodiments of the present disclosure;
FIG. 3 shows a flowchart of a downlink positioning method according to one or more embodiments of the present disclosure;
FIG. 4 shows a flowchart of a downlink positioning method according to one or more embodiments of the present disclosure;
FIG. 5 shows a flowchart of a downlink positioning method according to one or more embodiments of the present disclosure;
FIG. 6 shows a flowchart of a downlink positioning method according to one or more embodiments of the present disclosure;
FIG. 7 shows a block diagram of a downlink positioning apparatus according to one or more embodiments of the present disclosure;
FIG. 8 shows a block diagram of a downlink positioning apparatus according to one or more embodiments of the present disclosure; and
FIG. 9 shows a schematic diagram of a structure of a communication device according to one or more embodiments of the present disclosure.

### DETAILED DESCRIPTION

In order to make the purpose, technical solutions, and advantages of the present disclosure clearer, a further detailed description of embodiments of the present disclosure will be provided in the following in conjunction with the drawings. A detailed explanation of embodiments will be provided herein, which are illustrated in the drawings. The following description when referring to the drawings, unless otherwise indicated, the same reference numerals in different drawings represent the same or similar elements. The embodiments described in the following do not represent all embodiments consistent with the present disclosure. On the contrary, the embodiments are only examples of devices and methods consistent with some aspects of the present disclosure as detailed in the appended claims. The communication systems and business scenarios described in embodiments of the present disclosure are intended to more clearly explain, but do not constitute a limitation on, the technical solutions of embodiments of the present disclosure. Those of ordinary skill in the art know that with the evolution of communication systems and the emergence of new business scenarios, the technical solutions provided by embodiments of the present disclosure are also applicable to similar technical problems. Terms used in present disclosure are for the purpose of describing specific embodiments only and are not intended to limit the present disclosure. Singular forms "a/an", "said", and "the" used in the present disclosure and the appended claims are also intended to include multiple forms, unless the context clearly indicates otherwise. It should also be understood that the term "and/or" used herein refers to and includes any or all possible combinations of one or more related items listed.

It should be understood that although various information may be described using terms such as first, second, etc. in the present disclosure, such information should not be limited to these terms. These terms are only used to distinguish information of the same type from each other. For example, without departing from the scope of the present disclosure, the first parameter can also be referred to as the second parameter, and similarly, the second parameter can also be referred to as the first parameter. For example, the word "if" used herein can be interpreted as "when", or "while", or "in response to determination", depending on the context.

It should be noted that the information (including but not limited to user device information, user personal information, etc.), data (including but not limited to data used for analysis, stored data, displayed data, etc.), and signals involved in the present disclosure are all authorized by users or fully authorized by all parties, and the collection, use, and processing of relevant data must comply with relevant laws, regulations, and standards of relevant countries and regions.

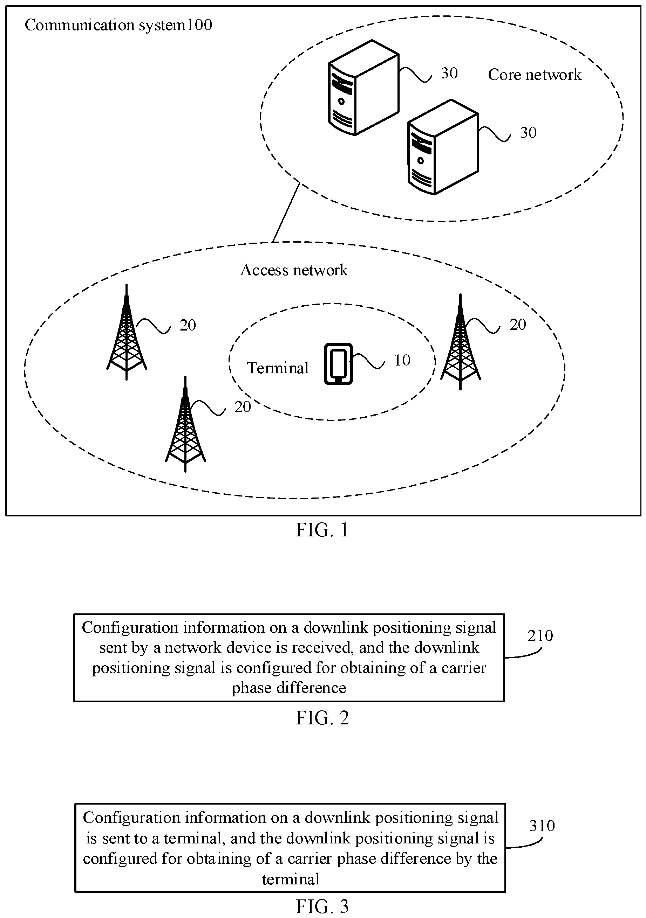

As shown in FIG. 1, where a schematic diagram of a communication system 100 according to one or more embodiments of the present disclosure is provided. The communication system 100 can include a terminal 10 and a network device, and the network device can include at least one of an access network device 20 and a core network device 30.

The terminal 10 can refer to user equipment (UE), access terminals, user units, user nodes, mobile nodes, mobile stations (MS), remote stations, remote terminals, mobile devices, wireless communication devices, user agents, or user devices. In some embodiments, the terminal 10 can also be a cellular phone, a cordless phone, a session initiation protocol (SIP) phone, a wireless local loop (WLL) station, a personal digital assistant (PDA), a handheld device with wireless communication functionality, a computing device or other processing devices connected to a wireless modem, a vehicle mounted device, a wearable device, a terminal in the 5th generation system (5GS), or a terminal in the future evolved public land mobile network (PLMN), etc., which are not limited by embodiments of the present disclosure. For the convenience of description, the devices mentioned above are collectively referred to as terminals. The number of terminals 10 is usually multiple, and one or more terminals 10 can be distributed within the cell managed by each access network device 20.

The access network device 20 is a device deployed in the access network to provide the wireless communication functionality for the terminal 10. The access network device 20 can include various forms of macro base stations, micro base stations, relay stations, access points, and so on. In systems using different wireless access technologies, the names of devices with the access network functionality may vary, for example, gNodeB or gNB in 5G NR systems. With the evolution of the communication technology, the name "access network device" may change. For the convenience of description, in embodiments of the present disclosure, the devices that provide the wireless communication functionality for the terminal 10 are collectively referred to as access network devices. In some embodiments, a communication relationship can be established between the terminal 10 and the core network device 30 through the access network device 20. In some embodiments, in the Long Term Evolution (LTE) system, the access network device 20 can be one or more eNodeBs in the Evolved Universal Terrestrial Radio Access Network or EUTRAN. In some embodiments, in the 5G NR system, the access network device 20 can be one or more gNBs in the Radio Access Network or RAN.

In some embodiments, each access network device 20 includes one or more transmission reference points (TRP), and each TRP can be referred to as a positioning node. The terminal receives the downlink positioning signal sent by the positioning node, performs the measurement on the downlink positioning signal and reports the measurement result.

The core network device 30 is a device deployed in the core network. The main functionality of the core network device 30 is to provide connection and management for the user, and complete bearer services, serving as an interface between the bearer network and the external network. In some embodiments, the core network device in the 5G NR system can include the Access and Mobility Management Function (AMF) network element, the User Plane Function (UPF) network element, and the Session Management Function (SMF) network element.

In some embodiments, the core network device 30 in embodiments of the present disclosure can include a location management function network element. In some embodiments, the location management function network element includes a location server, which can be implemented as any of the following: LMF (Position Management Function), E-SMLC (Enhanced Serving Mobile Location Centre), SUPL (Secure User Plane Location), and SUPL SLP (SUPL Location Platform).

In some embodiments, the access network device 20 and the core network device 30 communicate with each other through some air interface technology, for example, the NG interface in the 5G NR system. The access network device 20 and the terminal 10 communicate with each other through some air interface technology, for example, the Uu interface.

The "5G NR system" in embodiments of the present disclosure can also be referred to as the 5G system or the NR system, and those skilled in the art can understand the meaning thereof. The technical solutions described in embodiments of the present disclosure can be applied to the 5G NR system, and can also be applied to the evolution system subsequent to the 5G NR system.

The technical solutions provided by embodiments of the present disclosure can be applied to various communication systems, such as Global System of Mobile Communication (GSM) systems, Code Division Multiple Access (CDMA) systems, Wideband Code Division Multiple Access (WCDMA) systems, General Packet Radio Service (GPRS), Long Term Evolution (LTE) systems, LTE Frequency Division Duplex (FDD) systems, LTE Time Division Duplex (TDD) systems, Advanced Long Term Evolution (LTE A) systems, New Radio (NR) systems, and evolution systems for NR systems, LTE-based access to Unlicensed spectrum (LTE-U) systems, NR-U systems, Universal Mobile Telecommunication Systems (UMTS), Worldwide Interoperability for Microwave Access (WiMAX) communication systems, Wireless Local Area Networks (WLAN), Wireless Fidelity (WiFi), next-generation communication systems, or other communication systems.

As shown in FIG. 2, where a flowchart of a downlink positioning method according to one or more embodiments of the present disclosure is provided. The method can be applied to a terminal, which can be the terminal in the communication system shown in FIG. 1. The method includes the following steps.

In step 210, configuration information on a downlink positioning signal sent by a network device is received, and the downlink positioning signal is configured for obtaining of a carrier phase difference.

The downlink positioning signal is used for the obtaining of the carrier phase difference. The number of the downlink positioning signals is at least two. At least two downlink positioning signals are sent separately by at least two positioning nodes. In some embodiments, the downlink positioning signal includes one reference positioning signal and at least one positioning signal other than the reference positioning signal. The reference positioning signal is sent by a reference positioning node, and the positioning signal other than the reference positioning signal is sent by other positioning node(s). In some embodiments, for one or more carrier frequencies, one reference positioning node is configured.

In some embodiments, the downlink positioning signal includes a first positioning signal sent by a first positioning node and a second positioning signal sent by a second positioning node, and the second positioning node is the reference positioning node configured by the network device.

The positioning node is a TRP, meaning that the positioning node is an access network device. In some embodiments, the number of first positioning nodes is at least one, and the first positioning node can be the TRP for a serving cell or a neighboring cell for the terminal. In some embodiments, the number of second positioning nodes is one, and the second positioning node can be the TRP for a serving cell or a neighboring cell for the terminal, or the second positioning node can be the TRP for the serving cell for the terminal.

The carrier phase difference can also be referred to as a relative carrier phase or a downlink carrier phase difference or a downlink relative carrier phase. The carrier phase difference is defined as a difference between a phase of a downlink positioning signal received by the terminal from a positioning node j and a phase of a downlink positioning signal received from a positioning node i. The positioning node i is the reference positioning node, and needs to be configured by the network device. The positioning node j can also be referred to as the first positioning node, and the positioning node i can also be referred to as the second positioning node. The carrier phase difference can also be understood as a change in the carrier phase during a period from the moment the terminal receives the downlink positioning signal from the positioning node j to the moment the terminal receives the downlink positioning signal from the positioning node i. The carrier phase difference includes at least one of an intact cycle number and a fraction less than one cycle.

The carrier phase difference refers to the phase difference between two downlink positioning signals received by the terminal. In some embodiments, the carrier phase difference refers to the phase difference between the positioning signal(s) other than the reference positioning signal and the reference positioning signal, which are received by the terminal. In some embodiments, the carrier phase difference refers to the phase difference between the first positioning signal and the second positioning signal received by the terminal.

In some embodiments, the phase of the first positioning signal includes a first intact cycle number and a first fraction less than one cycle, and the phase of the second positioning signal includes a second intact cycle number and a second fraction less than one cycle. The carrier phase difference obtained by performing the subtraction between the phase of the first positioning signal and the phase of the second positioning signal includes a third intact cycle number and a third fraction less than one cycle.

The network device can be the access network device or the core network device. In some embodiments, when the network device is the core network device, the core network device includes a location management function network element. In some embodiments, the location management function network element includes a location server. After establishing the Radio Resource Control (RRC) connection to the terminal, the location server sends the configuration information on the downlink positioning signal to the terminal using the LTE Positioning Protocol (LPP) through the interface between the location server and the terminal.

The terminal receives and measures the downlink positioning signal sent by the positioning node based on the configuration information on the downlink positioning signal, to obtain the carrier phase difference based on the measurement, and reports the carrier phase difference as the measurement result to the network device. The network device calculates the location of the terminal based on the carrier phase difference.

In some embodiments, the downlink positioning signal includes the Positioning Reference Signal (PRS), or a new reference signal used for positioning.

According to the method provided by embodiments of the present disclosure, the carrier phase difference is introduced into the cellular network, to configure the downlink positioning signal, which can be used for positioning based on the carrier phase difference, for the terminal. The terminal receives the downlink positioning signal based on the configuration information, and measures the carrier phase difference, so that the location of the terminal can be calculated based on the carrier phase difference, thereby positioning the terminal accurately, and achieving the centimeter level positioning accuracy.

As shown in FIG. 3, where a flowchart of a downlink positioning method according to one or more embodiments of the present disclosure is provided. The method can be applied to a network device, which can be the access network device or the core network device in the communication system shown in FIG. 1. The method includes the following steps.

In step 310, configuration information on a downlink positioning signal is sent to a terminal, and the downlink positioning signal is configured for obtaining of a carrier phase difference by the terminal.

The configuration information on the downlink positioning signal includes configuration information on the first positioning signal and the second positioning signal.

The configuration information on the downlink positioning signal includes at least one of the following: a cycle, a slot offset, a number of repetitions in a single cycle, a time gap between two repetitions (a time gap between each two repeated sending), a number of occupied symbols, a muting pattern, a comb size (a comb-structure/comb-tooth size), a starting symbol position, Sub-Carrier Spacing (SCS), Quasi-Colocation (QCL) information, a number of sampling for a measurement, a carrier frequency, a bandwidth, and a starting physical resource block (PRB) position.

In some embodiments, the downlink positioning signal is sent periodically, or the downlink positioning signal is sent non-periodically, or the downlink positioning signal is sent in a semi-persistent manner.

In some embodiments, the configuration information on the downlink positioning signal further includes a positioning signal set or a positioning node or a TRP corresponding to each downlink positioning signal.

In some embodiments, the configuration information on the downlink positioning signal includes identification information corresponding to the downlink positioning signal, which includes identification of the positioning signal set or identification of the positioning node. In some embodiments, the downlink positioning signals can be divided into several sets. In some embodiments, the downlink positioning signals from the same base station or TRP belong to the same downlink positioning signal set.

According to the method provided by embodiments of the present disclosure, the carrier phase difference is introduced into the cellular network, to configure the downlink positioning signal, which can be used for positioning based on the carrier phase difference, for the terminal. The terminal receives the downlink positioning signal based on the configuration information, and measures the carrier phase difference, so that the location of the terminal can be calculated based on the carrier phase difference, thereby positioning the terminal accurately, and achieving the centimeter level positioning accuracy.

Embodiments where the carrier phase difference is measured based on a first positioning signal and a second positioning signal will be provided in the following.

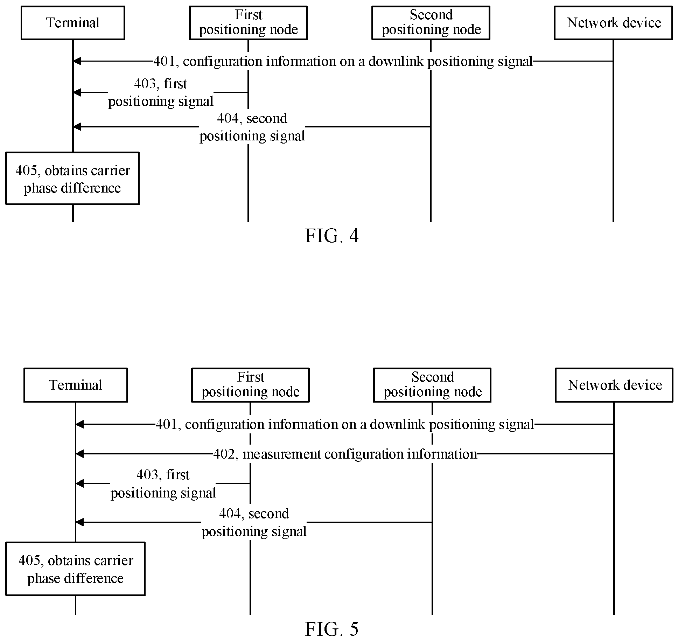

As shown in FIG. 4, where a flowchart of a downlink positioning method according to one or more embodiments of the present disclosure is provided. The method can be applied to the terminal and the network device in the communication system shown in FIG. 1, and the network device can be the access network device or the core network device. The method includes the following steps.

In step 401, the terminal receives configuration information on a downlink positioning signal sent by the network device.

In some embodiments, the network device sends an LPP message to the terminal, which includes the configuration information on the downlink positioning signal. The terminal receives the LPP message sent by the network device and reads the configuration information on the downlink positioning signal in the LPP message. The configuration information is used to configure the first positioning signal and the second positioning signal.

In step 403, the terminal receives the first positioning signal sent by the first positioning node.

The first positioning node sends the first positioning signal to the terminal based on the configuration information on the downlink positioning signal. The terminal receives the first positioning signal based on the configuration information on the downlink positioning signal, measures the first positioning signal, and obtains the carrier phase of the first positioning signal.

In some embodiments, the terminal receives at least one first positioning signal sent by at least one first positioning node.

In some embodiments, the terminal measures the carrier phase of the first positioning signal (first carrier phase). In some embodiments, the terminal can measure the first positioning signal at multiple time points to obtain the carrier phase corresponding to each of the multiple time points (timestamps).

In some embodiments, the terminal can also measure multiple first positioning signals at one time point to obtain the carrier phases corresponding to each of the multiple first positioning signals. Each carrier phase (first carrier phase) corresponds to the identification and/or the timestamp corresponding to the first positioning signal.

In step 404, the terminal receives the second positioning signal sent by the second positioning node.

The second positioning node sends the second positioning signal to the terminal based on the configuration information on the downlink positioning signal. The terminal receives the second positioning signal based on the configuration information on the downlink positioning signal and measurement configuration information, and measures the second positioning signal. The second positioning node is the reference positioning node configured by the network device. The second positioning signal is the reference positioning signal.

In some embodiments, the terminal measures the carrier phase (second carrier phase) of the second positioning signal. In some embodiments, the terminal can measure the second positioning signal at multiple time points to obtain the carrier phase corresponding to each of the multiple time points (timestamps).

The execution order of steps 403 and 404 is not in any particular order, that is, the two steps can be executed simultaneously or in any order.

In some embodiments, before executing the step 404, the terminal also needs to determine whether the reference positioning node has failed. The failure criterion can be configured by the network device, or can be a default criterion. In some embodiments, the terminal determines whether it is within the coverage range of the reference positioning node, or whether the reference positioning node can send the reference downlink positioning signal at a specified time.

The terminal determines that the valid state of the second positioning node based on the failure criterion. The failure criterion is configured by the network device, or the failure criterion is pre-configured. In some embodiments, if a change in the Timing Advance (TA) of the terminal with respect to the second positioning node is greater than a threshold, it is determined that the second positioning node has failed.

In some embodiments, in the case where the second positioning node is valid, the terminal receives and measures the second positioning signal sent by the second positioning node.

In some embodiments, in the case where the second positioning node fails, the terminal sends a failure indication to the network device, which is configured to indicate the invalid state of the second positioning node, so that the network device can reconfigure the reference positioning node for the terminal.

In step 405, the terminal obtains the carrier phase difference.

The carrier phase difference is the measurement result by the terminal. The carrier phase difference is the difference between the first carrier phase of the first positioning signal and the second carrier phase of the second positioning signal. In some embodiments, the difference between the first carrier phase and the second carrier phase is calculated, to obtain the carrier phase difference that corresponds to the timestamp at which the first carrier phase is obtained.

In some embodiments, for the case where multiple first carrier phases correspond to multiple first positioning signals, the subtraction can be performed between each first carrier phase and the second carrier phase of the second positioning signal, to obtain multiple carrier phase differences corresponding to the multiple first positioning signals. The carrier phase differences each corresponds to the identification of the first positioning signal. The multiple carrier phase differences correspond to different identifications of the first positioning signals, and the same timestamp.

In some embodiments, for the case where multiple first carrier phases correspond to the same first positioning signal located at multiple time points, the subtraction can be performed between the second carrier phase of the second positioning signal at one time point and each first carrier phase, to obtain multiple carrier phase differences corresponding to the multiple time points. The multiple carrier phase differences correspond to the same identification of the first positioning signal, different timestamps of the first positioning signal, and the same timestamp of the second positioning signal.

In some embodiments, for the case where multiple first carrier phases correspond to the same first positioning signal located at multiple time points, the subtraction can be performed between each of multiple second carrier phases of the second positioning signals at multiple time points and each first carrier phase correspondingly (the time is in one-to-one correspondence), to obtain multiple carrier phase differences corresponding to the multiple time points. The multiple carrier phase differences correspond to the same identification of the first positioning signal, different timestamps of the first positioning signal, and different timestamps of the second positioning signal. In some embodiments, the carrier phase difference is in one-to-one correspondence with at least one of the following: the timestamp of the first positioning signal, the timestamp of the second positioning signal, the identification of the first positioning signal, or the identification of the second positioning signal.

In some embodiments, the terminal can send at least one carrier phase difference obtained to the network device. In some embodiments, the terminal can calculate its location based on the at least one carrier phase difference, obtain location information, and send the location information thereof to the network device.

According to the method provided by embodiments of the present disclosure, the carrier phase difference is introduced into the cellular network, to configure the downlink positioning signal, which can be used for positioning based on the carrier phase difference, for the terminal. The terminal receives the reference downlink positioning signal sent by the reference positioning node and other downlink positioning signals sent by other positioning nodes based on the configuration information, and obtains the carrier phase difference by measuring the phase difference between the reference downlink positioning signal and other downlink positioning signals, so that the location of the terminal can be calculated based on the carrier phase difference, thereby positioning the terminal accurately, and achieving the centimeter level positioning accuracy.

In some embodiments, the network device can also configure measurement configuration information for the terminal, indicating a time window for receiving the downlink positioning signal.

As shown in FIG. 5, where a flowchart of a downlink positioning method according to one or more embodiments of the present disclosure is provided. The method can be applied to the terminal and the network device in the communication system shown in FIG. 1, and the network device can be the access network device or the core network device. Based on embodiments shown in FIG. 4, the method further includes step 402.

In step 401, the terminal receives configuration information on a downlink positioning signal sent by the network device.

In step 402, the terminal receives measurement configuration information sent by the network device.

The measurement configuration information is used to configure a measurement time for measuring the downlink positioning signal. The measurement configuration information is used to configure at least one measurement gap (MG) and/or at least one processing window for receiving of the downlink positioning signal. In some embodiments, at least one MG and/or processing window is configured for all downlink positioning signals, or at least one MG and/or processing window is configured for each downlink positioning signal set on each carrier frequency, or at least one MG and/or processing window is configured for the downlink positioning signal set on multiple carrier frequencies.

In some embodiments, the measurement configuration information can be configured based on the Radio Resource Control (RRC) message. Parameter information on the at least one MG/processing window is configured in the RRC message. In some embodiments, the measurement configuration information can be configured based on the RRC message and the Medium Access Control Control Element (MAC CE) message. Parameter information on multiple MGs/processing windows and corresponding MG IDs (identities)/processing window IDs are configured in the RRC message, and the MAC CE activates the MG ID/processing window ID corresponding to at least one MG/processing window.

When the measurement configuration information is used to configure at least one MG, the measurement configuration information includes at least one of a cycle, a starting slot, or a gap duration of at least one MG. For example, the cycle of the MG is 20/40/80/160ms, and the length of the MG is 1/1.5/2/2.5/3/3.5/4/4.5/5/5.5/6ms. The terminal can receive, within the periodically occurring MG, the downlink positioning signal and measure the downlink positioning signal, without receiving other downlink channel signals, such as PDCCH (Physical Downlink Control Channel), PDSCH (Physical Downlink Shared Channel), CSI-RS (Channel State Information Reference Signal), PBCH (Physical Broadcast Channel), SSB (Synchronization Signal Block), etc., sent by the access network device.

In some embodiments, the terminal receives a first RRC message sent by the network device. The first RRC message includes the measurement configuration information on at least one MG. In some embodiments, the terminal receives a second RRC message sent by the network device. The second RRC message includes the measurement configuration information for configuring m MGs, where m is a positive integer. The terminal also receives a first MAC CE sent by the network device. The first MAC CE is used to activate at least one MG out of m MGs.

When the measurement configuration information is used to configure at least one processing window, the measurement configuration information includes at least one of a cycle, a starting slot, a duration, reference SCS, or a priority of the downlink positioning signal of at least one processing window.

The priority of the downlink positioning signal includes: the priority of the downlink positioning signal compared to the non-URLLC (Ultra Reliability and Low Latency Communication) signal and the URLLC signal. The non-URLLC signal includes at least one of PDCCH, PDSCH, or CSI-RS corresponding to the non-URLLC signal. The URLLC signal includes at least one of PDCCH, PDSCH, or CSI-RS corresponding to the URLLC.

In some embodiments, the priority of the downlink positioning signal is higher than the above two types of PDCCH/DSCH/CSI-RS, or the priority of the downlink positioning signal is higher than non-URLLC PDCCH/DSCH/CSI-RS but lower than the URLLC PDCCH/DSCH/CSI-RS, or the priority of the downlink positioning signal is lower than the above two types of PDCCH/DSCH/CSI-RS. In some embodiments, the priority of PDCCH/PDMSH/CSI-RS corresponding to the URLLC is determined by the priority of HARQ-ACK (Hybrid Automatic Repeat reQuest-Acknowledgement) for the URLLC. In some embodiments, the downlink positioning signal can be received and processed according to the priority thereof during the measurement.

In some embodiments, the terminal receives a third RRC message sent by the network device. The third RRC message includes the measurement configuration information on at least one processing window. In some embodiments, the terminal receives a fourth RRC message sent by the network device. The fourth RRC message includes the measurement configuration information for configuring n processing windows, where n is a positive integer. The terminal also receives a second MAC CE sent by the network device. The second MAC CE is used to activate at least one processing window out of n processing windows.

In some embodiments, the measurement configuration information can further include the identification of the downlink positioning signal corresponding to the MG/processing window, and/or the identification of the carrier frequency used for sending the downlink positioning signal, which is used to indicate that the MG/processing window receives the downlink positioning signal corresponding to the identification or the downlink positioning signal on the carrier frequency corresponding to the identification.

In step 403, the terminal receives the first positioning signal sent by the first positioning node.

The terminal receives the first positioning signal within the MG/processing window indicated by the measurement configuration information, and measures the first positioning signal to obtain at least one first carrier phase.

In step 404, the terminal receives the second positioning signal sent by the second positioning node.

The terminal receives the second positioning signal within the MG/processing window indicated by the measurement configuration information, and measures the second positioning signal to obtain at least one second carrier phase.

In step 405, the terminal obtains the carrier phase difference.

The difference between the first carrier phase and the second carrier phase is calculated, to obtain the carrier phase difference, and at least one of the following is correspondingly recorded: the carrier phase difference, the identification of the first positioning signal corresponding to the carrier phase difference, the timestamp of the first carrier phase, the identification of the second positioning signal, and the timestamp of the second carrier phase.

According to the method provided by embodiments of the present disclosure, the measurement configuration information is sent to the terminal, and at least one MG/processing window is configured for the terminal, so that the terminal can receive and measure the downlink positioning signal within the at least one MG/processing window, to obtain the carrier phase difference. The location of the terminal can then be determined based on the carrier phase difference, thereby improving the accuracy of positioning of the terminal.

Embodiments where the terminal sends a positioning report will be provided in the following.

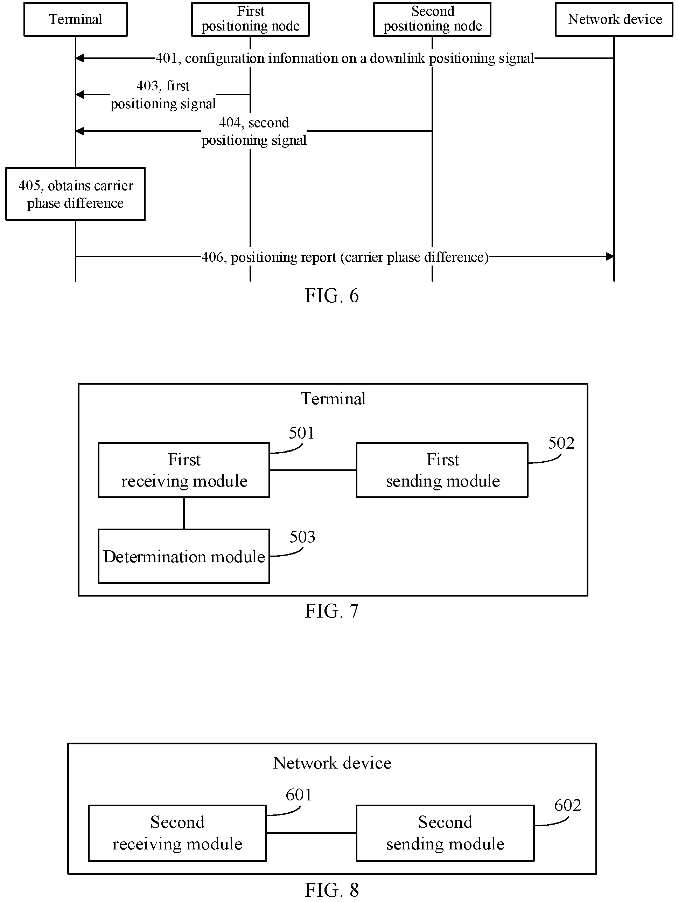

As shown in FIG. 6, where a flowchart of a downlink positioning method according to one or more embodiments of the present disclosure is provided. The method can be applied to the terminal and the network device in the communication system shown in FIG. 1, and the network device can be the access network device or the core network device. Based on embodiments shown in FIG. 4, the method further includes step 406.

In step 401, the terminal receives configuration information on a downlink positioning signal sent by the network device.

In step 403, the terminal receives the first positioning signal sent by the first positioning node.

In some embodiments, the terminal measures the carrier phase 1 of the first positioning signal 1 sent by the first positioning node 1 at time instant 1. The terminal measures the carrier phase 2 of the first positioning signal 2 sent by the first positioning node 2 at time instant 2. The time instant 1 can be the same as or different from the time instant 2.

In some embodiments, that the terminal respectively measures two carrier phases of two first positioning signals at two different time instants is taken as an example. In some embodiments, the terminal can also measure any number of first positioning signals sent by any number of positioning nodes at any number of time instants to obtain any number of carrier phases.

In step 404, the terminal receives the second positioning signal sent by the second positioning node.

In some embodiments, the terminal measures the carrier phase 3 of the second positioning signal at time instant 3. The time instant 3 can be the same as or different from the time instant 2.

In some embodiments, that the terminal measures only one carrier phase of one second positioning signal at one time instant is taken as an example. In some embodiments, the terminal can also measure any number of second positioning signals at any number of time instants to obtain any number of carrier phases.

In step 405, the terminal obtains the carrier phase difference.

In some embodiments, the terminal calculates the difference between the carrier phase 3 and the carrier phase 1 to obtain the carrier phase difference 1, and calculates the difference between the carrier phase 3 and the carrier phase 2 to obtain the carrier phase difference 2. In some embodiments, the carrier phase difference 1 corresponds to the first positioning node, the first positioning signal 1, time instant 1, the second positioning signal, and time instant 3, and the carrier phase difference 2 corresponds to the second positioning node, the first positioning signal 2, time instant 2, the second positioning signal, time instant 3.

In some embodiments, for the first carrier phase of the first positioning signal measured in step 402 and the second carrier phase of the second positioning signal measured in step 403, one carrier phase difference can be obtained by arbitrarily selecting one of the first carrier phases and one of the second carrier phases, and by performing the subtraction between the selected first carrier phase and the second carrier phase. In some embodiments, based on the timestamp of the first carrier phase and the timestamp of the second carrier phase, the first carrier phase and the second carrier phase with the same timestamp can be selected, and the carrier phase difference can be obtained by performing the subtraction between the selected first carrier phase and the second carrier phase.

In step 406, the terminal sends a positioning report to the network device, and the positioning report includes the carrier phase difference.

The network device receives the positioning report and calculates the location of the terminal based on the positioning report.

The positioning report includes at least one of the following: a carrier phase difference corresponding to at least one first positioning node, phase error group information corresponding to each carrier phase difference, a first positioning node (identification of the first positioning node) corresponding to each carrier phase difference, identification of a positioning signal (identification of a first positioning signal) corresponding to each carrier phase difference, identification of a positioning signal set corresponding to each carrier phase difference, line-of-sight (LOS) indication information corresponding to each carrier phase difference, or a timestamp corresponding to each carrier phase difference.

The carrier phase difference includes at least one of an intact cycle number of a phase, or a fraction less than one cycle of the phase. The phase error group information includes a phase error group ID or an error value.

One carrier phase difference corresponds to at least one timestamp. The multiple carrier phase differences can correspond to the same identification of the first positioning signal and different timestamps, or the multiple carrier phase differences can correspond to different identifications of first positioning signals and different timestamps, or the multiple carrier phase differences can correspond to different identifications of first positioning signals and the same timestamp.

The LOS indication information is configured to indicate whether a path measurement result is the LOS path, or configured to indicate a probability of being the LOS path.

The positioning report further includes at least one of the following: Reference Signal Receiving Power (RSRP), Angle of Arrival (AoA), Angle of Departure (AoD), Time of Arrival (ToA), Time Difference of Arrival (TDoA), Round Trip Time (RTT), or a time error group. In some embodiments, the time error group includes Rx Time Error Group (REG) or Tx Rx Time Error Group (TREG).

In some embodiments, the parameter included in the positioning report can be based on the path measurement result. In some embodiments, each different path corresponds to a group of parameters in the above positioning report. In some embodiments, the positioning report may not consider different paths, and different paths correspond to the same group of parameters in the above positioning report.

In some embodiments, the terminal can send the positioning report of the present measurement to the network device at the end of the MG/processing window for measuring the downlink positioning signal, and the positioning report includes at least one carrier phase difference. The terminal can also send the positioning report to the network device after obtaining one carrier phase difference, and the positioning report includes this carrier phase difference and the related information thereof.

According to the method provided by embodiments of the present disclosure, the terminal can send the positioning report to the network device, which includes the carrier phase difference. The network device calculates the location of the terminal based on the carrier phase difference, thereby positioning the terminal accurately, and achieving the centimeter level positioning accuracy.

It should be noted that those skilled in the art can combine any of the steps in any of the above embodiments to obtain new embodiments, which will not be repeated here.

FIG. 7 shows a block diagram of a downlink positioning apparatus according to one or more embodiments of the present disclosure. The apparatus can be implemented as a terminal or as a part of the terminal. The apparatus includes a first receiving module 501.

The first receiving module 501 is configured to receive configuration information on a downlink positioning signal sent by a network device, and the downlink positioning signal is configured for obtaining of a carrier phase difference.

In some embodiments, the downlink positioning signal includes a first positioning signal and a second positioning signal, and the carrier phase difference includes a difference between a phase of the first positioning signal and a phase of the second positioning signal.

In some embodiments, the first receiving module 501 is configured to receive the first positioning signal sent by a first positioning node, and to receive the second positioning signal sent by a second positioning node. The second positioning node is a reference positioning node configured by the network device.

In some embodiments, the configuration information on the downlink positioning signal includes at least one of the following: a cycle, a slot offset, a number of repetitions in a single cycle, a time gap between two repetitions, a number of occupied symbols, a muting pattern, a comb size, a starting symbol position, Sub-Carrier Spacing, Quasi-Colocation (QCL) information, a number of sampling for a measurement, a carrier frequency, a bandwidth, or a starting physical resource block (PRB) position.

In some embodiments, the configuration information on the downlink positioning signal further includes a positioning signal set or a positioning node corresponding to each downlink positioning signal.

In some embodiments, the apparatus further includes a first sending module 502, and the first sending module 502 is configured to send a positioning report to the network device. The positioning report includes the carrier phase difference.

In some embodiments, the positioning report includes at least one of the following: the carrier phase difference corresponding to at least one first positioning node, phase error group information corresponding to each carrier phase difference, the first positioning node corresponding to each carrier phase difference, identification of the positioning signal corresponding to each carrier phase difference, identification of a positioning signal set corresponding to each carrier phase difference, line-of-sight indication information corresponding to each carrier phase difference, or a timestamp corresponding to each carrier phase difference.

In some embodiments, the positioning report further includes at least one of the following: Reference Signal Receiving Power (RSRP), Angle of Arrival, Angle of Departure, Time of Arrival, Time Difference of Arrival, Round Trip Time, or a time error group.

In some embodiments, the apparatus further includes a determination module 503, and the determination module 503 is configured to determine a valid state of the second positioning node based on a failure criterion. The failure criterion is configured by the network device, or the failure criterion is pre-configured.

In some embodiments, the determination module 503 is configured to determine that the second positioning node fails, with a change in Timing Advance (TA) corresponding to the second positioning node being greater than a threshold.

In some embodiments, the first receiving module 501 is configured to receive measurement configuration information sent by the network device. The measurement configuration information is configured for configuring of at least one measurement gap (MG) and/or at least one processing window, and the at least one measurement gap (MG) and/or the at least one processing window are/is configured for receiving of the downlink positioning signal.

In some embodiments, the measurement configuration information is used to configure at least one MG. The first receiving module 501 is configured to receive a first Radio Resource Control (RRC) message sent by the network device, the first RRC message including the measurement configuration information; or the first receiving module 501 is configured to receive a second RRC message sent by the network device, the second RRC message including the measurement configuration information for configuring m MGs, where m is a positive integer; and to receive a first Medium Access Control Control Element (MAC CE) sent by the network device, the first MAC CE being configured for activating at least one MG out of the m MGs.

In some embodiments, the measurement configuration information is used to configure at least one processing window. The first receiving module 501 is configured to receive a third Radio Resource Control (RRC) message sent by the network device, the third RRC message including the measurement configuration information; or the first receiving module 501 is configured to receive a fourth RRC message sent by the network device, the fourth RRC message including the measurement configuration information for configuring n processing windows, where n is a positive integer; and to receive a second Medium Access Control Control Element (MAC CE) sent by the network device, the second MAC CE being configured for activating at least one processing window out of the n processing windows.

In some embodiments, the downlink positioning signal includes a positioning reference signal (PRS).

FIG. 8 shows a block diagram of a downlink positioning apparatus according to one or more embodiments of the present disclosure. The apparatus can be implemented as a network device or as a part of the network device. The apparatus includes a second sending module 602.

The second sending module 602 is configured to send configuration information on a downlink positioning signal to a terminal, the downlink positioning signal being configured for obtaining of a carrier phase difference by the terminal.

In some embodiments, the downlink positioning signal includes a first positioning signal and a second positioning signal, and the carrier phase difference includes a difference between a phase of the first positioning signal and a phase of the second positioning signal.

In some embodiments, the first positioning signal is sent by a first positioning node, the second positioning signal is sent by a second positioning node, and the second positioning node is a reference positioning node configured by the network device.

In some embodiments, the configuration information on the downlink positioning signal includes at least one of the following: a cycle, a slot offset, a number of repetitions in a single cycle, a time gap between two repetitions, a number of occupied symbols, a muting pattern, a comb size, a starting symbol position, Sub-Carrier Spacing, Quasi-Colocation (QCL) information, a number of sampling for a measurement, a carrier frequency, a bandwidth, or a starting physical resource block (PRB) position.

In some embodiments, the configuration information on the downlink positioning signal further includes a positioning signal set or a positioning node corresponding to each downlink positioning signal.

In some embodiments, the apparatus further includes a second receiving module 601, and the second receiving module 601 is configured to receive a positioning report sent by the terminal, the positioning report including the carrier phase difference.

In some embodiments, the positioning report includes at least one of the following: the carrier phase difference corresponding to at least one first positioning node, phase error group information corresponding to each carrier phase difference, the first positioning node corresponding to each carrier phase difference, identification of the positioning signal corresponding to each carrier phase difference, identification of a positioning signal set corresponding to each carrier phase difference, line-of-sight indication information corresponding to each carrier phase difference, or a timestamp corresponding to each carrier phase difference.

In some embodiments, the positioning report further includes at least one of the following: Reference Signal Receiving Power (RSRP), Angle of Arrival, Angle of Departure, Time of Arrival, Time Difference of Arrival, Round Trip Time, or a time error group.

In some embodiments, the second sending module 602 is configured to send a failure criterion to the terminal, the failure criterion being configured for determining of a valid state of the second positioning node.

In some embodiments, the failure criterion includes determining that the second positioning node fails, with a change in Timing Advance (TA) corresponding to the second positioning node being greater than a threshold.

In some embodiments, the second sending module 602 is configured to send measurement configuration information to the terminal. The measurement configuration information is configured for configuring of at least one measurement gap (MG) and/or at least one processing window, and the at least one measurement gap (MG) and/or the at least one processing window are/is configured for receiving of the downlink positioning signal.

In some embodiments, the measurement configuration information is used to configure at least one MG. The second sending module 602 is configured to send a first Radio Resource Control (RRC) message to the terminal, the first RRC message including the measurement configuration information; or the second sending module 602 is configured to send a second RRC message to the terminal, the second RRC message including the measurement configuration information for configuring m MGs, where m is a positive integer; and to send a first Medium Access Control Control Element (MAC CE) to the terminal, the first MAC CE being configured for activating at least one MG out of the m MGs.

In some embodiments, the measurement configuration information is used to configure at least one processing window. The second sending module 602 is configured to send a third Radio Resource Control (RRC) message to the terminal, the third RRC message including the measurement configuration information; or the second sending module 602 is configured to send fourth RRC message to the terminal, the fourth RRC message including the measurement configuration information for configuring n processing windows, where n is a positive integer; and to send a second Medium Access Control Control Element (MAC CE) to the terminal, the second MAC CE being configured for activating at least one processing window out of the n processing windows.

In some embodiments, the downlink positioning signal includes a positioning reference signal (PRS).

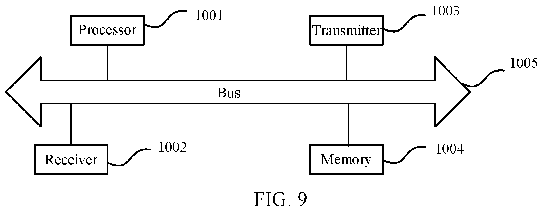

FIG. 9 shows a schematic diagram of a structure of a communication device (a terminal or a network device) according to one or more embodiments of the present disclosure. The communication device includes a processor 1001, a receiver 1002, a transmitter 1003, a memory 1004, and a bus 1005.

The processor 1001 includes one or more processing cores. The processor 1001 execute various functional applications and information processing by running software programs and modules.

The receiver 1002 and the transmitter 1003 can be implemented as a communication component, which can be a communication chip.

The memory 1004 is connected to the processor 1001 through the bus 1005.

The memory 1004 can be configured to store at least one instruction, and the processor 1001 is configured to execute the at least one instruction to implement the various steps in the above method embodiments.

In some embodiments, the memory 1004 can be implemented by any type of volatile or non-volatile storage device or combination thereof. The volatile or non-volatile storage device includes but not limited to: magnetic or optical disks, an electrically erasable programmable read-only memory (EEPROM), an erasable programmable read-only memory (EPROM), a static random access memory (SRAM), a read-only memory (ROM), a magnetic storage, a flash memory, a programmable read-only memory (PROM).

In some embodiments, when the communication device is implemented as a terminal, the processor and the transceiver in the communication device involved in embodiments of the present disclosure can execute the steps in any of the methods shown in FIGS. 2-4 executed by the terminal, which will not be repeated here.

In some embodiments, when the communication device is implemented as a terminal, the transceiver is configured to receive configuration information on the a downlink positioning signal sent by a network device. The downlink positioning signal is configured for obtaining of a carrier phase difference.

In some embodiments, when the communication device is implemented as a network device, the processor and the transceiver in the communication device involved in embodiments of the present disclosure can execute the steps in any of the methods shown in FIGS. 2-4 executed by the network device, which will not be repeated here.

In some embodiments, when the communication device is implemented as a network device, the transceiver is configured to send configuration information on a downlink positioning signal to a terminal. The downlink positioning signal is configured for obtaining of a carrier phase difference by the terminal.

In some embodiments, a computer-readable storage medium is also provided. The computer-readable storage medium stores at least one instruction, at least one program, a code set, or an instruction set. The at least one instruction, the at least one program, the code set, or the instruction set is loaded and executed by a processor to implement the downlink positioning methods provided by various method embodiments and executed by a communication device.

In some embodiments, a chip is also provided. The chip includes a programmable logic circuit and/or program instructions for implementing the downlink positioning methods described in the above when the chip is run on a computer device.

In some embodiments, a computer program product is also provided. A computer device is caused to implement the downlink positioning methods described in the above when the computer program product is run on a processor of the computer device.

Those of ordinary skill in the art can understand that all or part of the steps to implement the above embodiments can be completed through hardware, or by instructing relevant hardware through programs. The programs can be stored in a computer-readable storage medium, which can be a read-only memory, a disk, or an optical disc, etc.

The above descriptions are only embodiments of the present disclosure and are not intended to limit the present disclosure. Any modifications, equivalent substitutions, improvements, etc. made within the spirit and principle of the present disclosure shall be included within the protection scope of the present disclosure.

## Claims

1. A downlink positioning method, performed by a terminal, the method comprising:
receiving configuration information on a downlink positioning signal sent by a network device, wherein the downlink positioning signal is configured for obtaining of a carrier phase difference.

2. The method according to claim 1, wherein the downlink positioning signal comprises a first positioning signal and a second positioning signal, and the carrier phase difference comprises a difference between a phase of the first positioning signal and a phase of the second positioning signal.

3. The method according to claim 2, further comprising:
receiving the first positioning signal sent by a first positioning node; and
receiving the second positioning signal sent by a second positioning node, wherein the second positioning node is a reference positioning node configured by the network device.

4. The method according to claim 1, wherein the configuration information on the downlink positioning signal comprises at least one of a cycle, a slot offset, a number of repetitions in a single cycle, a time gap between two repetitions, a number of occupied symbols, a muting pattern, a comb size, a starting symbol position, Sub-Carrier Spacing, Quasi-Colocation (QCL) information, a number of sampling for a measurement, a carrier frequency, a bandwidth, or a starting physical resource block (PRB) position.

5. The method according to claim 4, wherein the configuration information on the downlink positioning signal further comprises a positioning signal set or a positioning node corresponding to each downlink positioning signal.

6. The method according to claim 3, further comprising:
sending a positioning report to the network device, wherein the positioning report comprises the carrier phase difference.

7. The method according to claim 6, wherein the positioning report comprises at least one of the carrier phase difference corresponding to at least one first positioning node, phase error group information corresponding to each carrier phase difference, the first positioning node corresponding to each carrier phase difference, identification of the positioning signal corresponding to each carrier phase difference, identification of a positioning signal set corresponding to each carrier phase difference, line-of-sight indication information corresponding to each carrier phase difference, or a timestamp corresponding to each carrier phase difference.

8. The method according to claim 7, wherein the positioning report further comprises at least one of Reference Signal Receiving Power (RSRP), Angle of Arrival, Angle of Departure, Time of Arrival, Time Difference of Arrival, Round Trip Time, or a time error group.

9. The method according to claim 3, further comprising:
determining a valid state of the second positioning node based on a failure criterion, wherein the failure criterion is configured by the network device, or the failure criterion is pre-configured.

10. The method according to claim 9, wherein determining the valid state of the second positioning node based on the failure criterion comprises:
determining that the second positioning node fails, wherein a change in Timing Advance (TA) corresponding to the second positioning node is greater than a threshold.

11. The method according to claim 1, further comprising:
receiving measurement configuration information sent by the network device, wherein the measurement configuration information is configured for configuring of at least one measurement gap (MG) and/or at least one processing window, and wherein the at least one measurement gap (MG) and/or the at least one processing window are/is configured for receiving of the downlink positioning signal.

12. The method according to claim 11, wherein the measurement configuration information is configured for configuring of at least one MG, and wherein receiving the measurement configuration information sent by the network device comprises:
receiving a first Radio Resource Control (RRC) message sent by the network device, wherein the first RRC message comprises the measurement configuration information;
or
receiving a second RRC message sent by the network device, wherein the second RRC message comprises the measurement configuration information for configuring m MGs, where m is a positive integer; and
receiving a first Medium Access Control Control Element (MAC CE) sent by the network device, wherein the first MAC CE is configured for activating at least one MG out of the m MGs.

13. The method according to claim 11, wherein the measurement configuration information is configured for configuring of at least one processing window, and wherein receiving the measurement configuration information sent by the network device comprises:
receiving a third Radio Resource Control (RRC) message sent by the network device, wherein the third RRC message comprises the measurement configuration information;
or
receiving a fourth RRC message sent by the network device, wherein the fourth RRC message comprises the measurement configuration information for configuring n processing windows, where n is a positive integer; and
receiving a second Medium Access Control Control Element (MAC CE) sent by the network device, wherein the second MAC CE is configured for activating at least one processing window out of the n processing windows.

14. The method according to any of claims 1 to 3, wherein the downlink positioning signal comprises a positioning reference signal (PRS).

15. A downlink positioning method, performed by a network device, the method comprising:
sending configuration information on a downlink positioning signal to a terminal, wherein the downlink positioning signal is configured for obtaining of a carrier phase difference by the terminal.

16. The method according to claim 15, wherein the downlink positioning signal comprises a first positioning signal and a second positioning signal, and the carrier phase difference comprises a difference between a phase of the first positioning signal and a phase of the second positioning signal.

17. The method according to claim 16, wherein the first positioning signal is sent by a first positioning node, the second positioning signal is sent by a second positioning node, and the second positioning node is a reference positioning node configured by the network device.

18. The method according to claim 15, wherein the configuration information on the downlink positioning signal comprises at least one of a cycle, a slot offset, a number of repetitions in a single cycle, a time gap between two repetitions, a number of occupied symbols, a muting pattern, a comb size, a starting symbol position, Sub-Carrier Spacing, Quasi-Colocation (QCL) information, a number of sampling for a measurement, a carrier frequency, a bandwidth, or a starting physical resource block (PRB) position.

19. The method according to claim 18, wherein the configuration information on the downlink positioning signal further comprises a positioning signal set or a positioning node corresponding to each downlink positioning signal.

20. The method according to claim 17, further comprising:
receiving a positioning report sent by the terminal, wherein the positioning report comprises the carrier phase difference.

21. The method according to claim 20, wherein the positioning report comprises at least one of the carrier phase difference corresponding to at least one first positioning node, phase error group information corresponding to each carrier phase difference, the first positioning node corresponding to each carrier phase difference, identification of the positioning signal corresponding to each carrier phase difference, identification of a positioning signal set corresponding to each carrier phase difference, line-of-sight indication information corresponding to each carrier phase difference, or a timestamp corresponding to each carrier phase difference.

22. The method according to claim 21, wherein the positioning report further comprises at least one of Reference Signal Receiving Power (RSRP), Angle of Arrival, Angle of Departure, Time of Arrival, Time Difference of Arrival, Round Trip Time, or a time error group.

23. The method according to claim 17, further comprising:
sending a failure criterion to the terminal, wherein the failure criterion is configured for determining of a valid state of the second positioning node.

24. The method according to claim 23, wherein the failure criterion comprises determining that the second positioning node fails, wherein a change in Timing Advance (TA) corresponding to the second positioning node is greater than a threshold.

25. The method according to claim 15, further comprising:
sending measurement configuration information to the terminal, wherein the measurement configuration information is configured for configuring of at least one measurement gap (MG) and/or at least one processing window, and wherein the at least one measurement gap (MG) and/or the at least one processing window are/is configured for receiving of the downlink positioning signal.

26. The method according to claim 25, wherein the measurement configuration information is configured for configuring of at least one MG, and wherein sending the measurement configuration information to the terminal comprises:
sending a first Radio Resource Control (RRC) message to the terminal, wherein the first RRC message comprises the measurement configuration information;
or
sending a second RRC message to the terminal, wherein the second RRC message comprises the measurement configuration information for configuring m MGs, where m is a positive integer; and
sending a first Medium Access Control Control Element (MAC CE) to the terminal, wherein the first MAC CE is configured for activating at least one MG out of the m MGs.

27. The method according to claim 25, wherein the measurement configuration information is configured for configuring of at least one processing window, and wherein sending the measurement configuration information to the terminal comprises:
sending a third Radio Resource Control (RRC) message to the terminal, wherein the third RRC message comprises the measurement configuration information;
or
sending a fourth RRC message to the terminal, wherein the fourth RRC message comprises the measurement configuration information for configuring n processing windows, where n is a positive integer; and
sending a second Medium Access Control Control Element (MAC CE) to the terminal, wherein the second MAC CE is configured for activating at least one processing window out of the n processing windows.

28. The method according to any of claims 15 to 17, wherein the downlink positioning signal comprises a positioning reference signal (PRS).

29. A downlink positioning apparatus, comprising:
a first receiving module configured to receive configuration information on a downlink positioning signal sent by a network device, wherein the downlink positioning signal is configured for obtaining of a carrier phase difference.

30. A downlink positioning apparatus, comprising:
a second sending module configured to send configuration information on a downlink positioning signal to a terminal, wherein the downlink positioning signal is configured for obtaining of a carrier phase difference by the terminal.

31. A terminal, comprising:
a transceiver configured to receive configuration information on a downlink positioning signal sent by a network device, wherein the downlink positioning signal is configured for obtaining of a carrier phase difference.

32. A network device, comprising:
a transceiver configured to send configuration information on a downlink positioning signal to a terminal, wherein the downlink positioning signal is configured for obtaining of a carrier phase difference by the terminal.

33. A computer-readable storage medium having executable instructions stored thereon, which can be loaded and executed by a processor to cause the downlink positioning method according to any of claims 1 to 28 to be implemented.

34. A chip comprising a programmable logic circuit or a program, wherein the chip is configured to cause the downlink positioning method according to any of claims 1 to 28 to be implemented.

35. A computer program product or a computer program, wherein the computer program product or the computer program comprises computer instructions stored in a computer-readable storage medium, and the computer instructions can be read by a processor from the computer-readable storage medium and executed by the processor, to cause the downlink positioning method according to any of claims 1 to 28 to be implemented.
